# EUROPEAN PATENT SPECIFICATION

(11) **EP 3 747 747 B1**
(45) Date of publication and mention of the grant of the patent: **19.04.2023**
(21) Application number: 18903136.2
(22) Date of filing: 31.01.2018
(51) Int. Cl.: B62J 99/00, B62H 5/00, B62J 9/14, B62J 9/30

(54) **SADDLE RIDING TYPE VEHICLE**
SATTELFAHRZEUG
VÉHICULE DE TYPE À SELLE

(43) Date of publication of application: 09.12.2020
(73) Proprietor: Honda Motor Co., Ltd., Tokyo 107-8556 (JP)
(72) Inventor: KURAMOCHI, Akira, Saitama 3510193 (JP)
(74) Representative: Feller, Frank
(86) International application number: PCT/JP2018/003232
(87) International publication number: WO 2019/150494

(56) References cited:
- EP-A1- 2 141 066
- JP-A- H 082 256
- JP-A- H05 213 251
- JP-A- H08 127 377
- JP-A- H10 100 959
- JP-A- H10 100 975
- JP-A- H11 208 548
- JP-A- 2002 054 331
- JP-A- 2008 056 009
- JP-A- 2009 101 892
- JP-A- 2013 248 984
- JP-A- 2015 021 236

## Description

### [Technical Field]

The present invention relates to a saddle riding type vehicle, and relates specifically to the saddle riding type vehicle provided with a storage portion capable of storing goods such as a helmet.

### [Background Art]

In the past, in the saddle riding type vehicle provided with a storage portion capable of storing goods such as a helmet, such configuration has been known that the opening of the storage portion is covered by a lid member that is lockable.

In Patent Document 1, in a motorcycle as the saddle riding type vehicle provided with a rear trunk as a storage portion, such configuration has been disclosed that a lid member can be opened by remote operation by a wireless portable key without inserting a physical key to the key cylinder of the trunk.

### [Citation List]

### [Patent Literature]

[Patent Document 1] JPatent 4191361 B2

Document JP2013248984A shows a saddle riding type vehicle provided with a storage portion that includes a lockable lid member, the saddle riding type vehicle comprising:a smart key authenticated by a control portion arranged in the saddle riding type vehicle by way of wireless communication;a locking mechanism locking and unlocking the lid member; an unlocking operation portion transmitting an unlocking signal to the control unit; and an actuator connected to the locking mechanism and driven according to an instruction of the control portion, wherein the unlocking operation portion is disposed at a position higher than a minimum ground clearance (H) of the saddle riding type vehicle and lower than a hinge mechanism that openably/closably supports a seat of the saddle riding type vehicle, the control portion drives the actuator to switch the locking mechanism to an unlocked state when the unlocking operation portion is operated, an unlocking signal is thereby transmitted, and authentication of the smart key is completed, a side kickstand allowing a vehicle body to self-stand in an inclined state is provided, and the unlocking operation portion is disposed in the vicinity of the side kickstand in a vehicle body side view.

### [Summary of Invention]

### [Problem to be solved by Invention]

However, according to the technology of Patent Document 1, since a button of the wireless portable key is required to be operated in order to open the lid member of the trunk, for example, when an occupant approaches the vehicle body holding a goods to be stored in both hands, such botheration may possibly occur that the goods are re-held by a single hand or the goods are placed down once to operate the wireless portable key.

The object of the present invention is to solve the problem of the prior art described above and to provide the saddle riding type vehicle capable of opening a lid member of a storage portion by a foot switch operated by a foot without operating a wireless portable key.

### [Solution to Problem]

To achieve the afore-mentioned object, the first invention has a first feature in that a saddle riding type vehicle (1) provided with a storage portion (25) that includes a lockable lid member (19), the saddle riding type vehicle (1) comprises a smart key (200) authenticated by a control unit (100) arranged in the saddle riding type vehicle (1) by way of wireless communication, a locking mechanism (30) locking and unlocking the lid member (19), an unlocking operation portion (50) transmitting an unlocking signal to the control unit (100), and an actuator (202) connected to the locking mechanism (30) and driven according to an instruction of the control unit (100), wherein the unlocking operation portion (50) is disposed at a position higher than a minimum ground clearance (H) of the saddle riding type vehicle (1) and lower than a hinge mechanism (150) that openably/closably supports a seat (19) of the saddle riding type vehicle (1), the control unit (100) drives the actuator (202) to switch the locking mechanism (30) to an unlocked state when the unlocking operation portion (50) is operated, an unlocking signal is thereby transmitted, and authentication of the smart key (200) is completed, a side kickstand (10) allowing a vehicle body to self-stand in an inclined state is provided, and the unlocking operation portion (50) is disposed in the vicinity of the side kickstand (10) in a vehicle body side view.

To achieve the afore-mentioned object, the first invention has a second feature in that the locking mechanism (30) is switched to a locked state by that a hook (21) provided on the lid member (19) is held by a lock plate (34) that is swingable, and the locking mechanism (30) is switched to an unlocked state by that, when the actuator (202) is driven, a cable (35) connected to the actuator (202) is pulled, the lock plate (34) swings, and the hook (21) is released.

A preferred embodiment has a third feature in that the motorcycle (1) includes an under frame (F5) and an under cowl (9), the under frame (F5) being disposed in the lower portion of a vehicle body, the under cowl (9) covering an exterior of the under frame (F5), and the unlocking operation portion (50) is fixed to the under frame (F5) at a position inside the under cowl (9).

The second invention has a fourth feature in that the unlocking operation portion (50) includes a plate-like portion (52) and a switch unit (60), an occupant pressing the plate-like portion (52) by his/her foot, the switch unit (60) being switched on when the plate-like portion (52) is pressed and a projecting/retracting element (63) thereby comes to a retracted state.

A preferred embodiment of the second invention has a fifth feature in that the unlocking operation portion (50) is disposed so that the switch unit (60) is switched on by that the plate-like portion (52) is pressed vehicle body upward.

A preferred embodiment of the second invention has a sixth feature in that the unlocking operation portion (50) is disposed so that the switch unit (60) is switched on by that the plate-like portion (52) is pressed inward in the vehicle body width direction.

A preferred embodiment of the first or second invention has a seventh feature in that the unlocking operation portion (50) is covered by the side kickstand (10) in a vehicle body side view when the side kickstand (10) is stored.

### [Effects of Invention]

According to the first feature of the first invention, a saddle riding type vehicle (1) provided with a storage portion (25) that includes a lockable lid member (19), the saddle riding type vehicle (1) comprising: a smart key (200) authenticated by a control unit (100) arranged in the saddle riding type vehicle (1) by way of wireless communication; a locking mechanism (30) locking and unlocking the lid member (19); an unlocking operation portion (50) transmitting an unlocking signal to the control unit (100); and an actuator (202) connected to the locking mechanism (30) and driven according to an instruction of the control unit (100), wherein the unlocking operation portion (50) is disposed at a position higher than a minimum ground clearance (H) of the saddle riding type vehicle (1) and lower than a hinge mechanism (150) that openably/closably supports a seat (19) of the saddle riding type vehicle (1), the control unit (100) drives the actuator (202) to switch the locking mechanism (30) to an unlocked state when the unlocking operation portion (50) is operated, an unlocking signal is thereby transmitted, and authentication of the smart key (200) is completed, a side kickstand (10) allowing a vehicle body to self-stand in an inclined state is provided, and the unlocking operation portion (50) is disposed in the vicinity of the side kickstand (10) in a vehicle body side view. Therefore, by operating the unlocking operation portion by the foot, the unlocking operation portion being disposed at a low position of the vehicle body of the saddle riding type vehicle, the lid member of the storage portion can be unlocked without operating the smart key. Thus, for example, even when the occupant approaches the saddle riding type vehicle holding goods to be loaded in both hands, the occupant can get access to the storage portion by operating the unlocking operation portion by the foot, and therefore user-friendliness of the storage portion can be improved. Also, since the unlocking operation portion is disposed at a position higher than the minimum ground clearance of the saddle riding type vehicle, such event can be prevented that the unlocking operation portion is operated by grounding of the bottom portion of the saddle riding type vehicle in riding over a step, and so on.

Further, when the occupant gets access to the storage portion of the vehicle that is stopped using the side kickstand, it is supposed that the occupant naturally stands at a position close to the grounding portion of the side kickstand. However, since the unlocking operation portion is disposed in the vicinity of the side kickstand, the occupant can operate the unlocking operation portion without moving from the position where the occupant stands naturally, and usability of the storage portion improves.

According to the second feature of the first invention, the locking mechanism (30) is switched to a locked state by that a hook (21) arranged in the lid member (19) is held by a lock plate (34) that is swingable, and the locking mechanism (30) is switched to an unlocked state by that, when the actuator (202) is driven, a cable (35) connected to the actuator (202) is pulled, the lock plate (34) swings, and the hook (21) is released. Therefore, by the simple configuration of pulling the cable by the actuator, the lid member can be unlocked only by operating the unlocking operation portion. Also, by connecting a cable to the single lock plate, the cable being connected to a manual lever, it can be configured to enable unlocking operation by either of the manual lever or the actuator without largely changing the configuration of the unlocking mechanism.

According to the third feature of a preferred embodiment, the motorcycle (1) includes an under frame (F5) and an under cowl (9), the under frame (F5) being disposed in the lower portion of a vehicle body, the under cowl (9) covering an exterior of the under frame (F5), and the unlocking operation portion (50) is fixed to the under frame (F5) at a position inside the under cowl (9). Therefore, the unlocking operation portion can be fixed stably to a position hardly visible in the vehicle side view.

According to the fourth feature of the second invention, the unlocking operation portion (50) includes a plate-like portion (52) and a switch unit (60), an occupant pressing the plate-like portion (52) by his/her foot, the switch unit (60) being switched on when the plate-like portion (52) is pressed and a projecting/retracting element (63) thereby comes to a retracted state. Therefore, the production cost of the unlocking operation portion can be reduced using the switch unit having a simple configuration such as a tactile switch. Also, by using a switch where the projecting/retracting element reciprocatingly moves, comfortable moderate feeling can be imparted to operation of the unlocking operation portion.

According to the fifth feature of a preferred embodiment of the second invention, the unlocking operation portion (50) is disposed so that the switch unit (60) is switched on by that the plate-like portion (52) is pressed vehicle body upward. Therefore, it is facilitated to operate the unlocking operation portion by that the occupant allows the toe to contact the unlocking operation portion in a scraping up manner, the unlocking operation portion being disposed in the lower portion of the vehicle body, and usability of the unlocking operation portion can be improved.

According to the sixth feature of a preferred embodiment of the second invention, the unlocking operation portion (50) is disposed so that the switch unit (60) is switched on by that the plate-like portion (52) is pressed inward in the vehicle body width direction. Therefore, it is facilitated for the occupant to operate the unlocking operation portion so as to press the unlocking operation portion disposed in the lower portion of the vehicle body by the bottom portion of the toe, and usability of the unlocking operation portion can be improved.

According to the seventh feature of a preferred embodiment of the first or second invention, the unlocking operation portion (50) is covered by the side kickstand (10) in a vehicle body side view when the side kickstand (10) is stored. Therefore, the unlocking operation portion can be protected against flying stones and the like during traveling by the side kickstand and the under cowl.

### [Brief Description of Drawings]

FIG. 1 is a left side view of a motorcycle related to an embodiment of the present invention.
FIG. 2 is a perspective view of the motorcycle.
FIG. 3 is a perspective view of the foot switch.
FIG. 4 is a perspective view of the foot switch.
FIG. 5 is a perspective view illustrating the seat catch mechanism and its surrounding structure.
FIG. 6 is a block diagram illustrating an overall configuration of the unlocking system by the foot switch.
FIG. 7 is a partial enlarged left side view of the motorcycle illustrating the first disposal position of the foot switch.
FIG. 8 is a partial enlarged view of FIG. 7.
FIG. 9 is a perspective view when the disposal state of the foot switch of FIG. 7 is viewed from the vehicle body left rear.
FIG. 10 is a cross-sectional view taken along the line X-X of FIG. 8.
FIG. 11 is a partial enlarged left side view of the motorcycle illustrating the second disposal position of the foot switch.
FIG. 12 is a partial enlarged view of FIG. 11.
FIG. 13 is a bottom view of the motorcycle illustrating the second disposal position of the foot switch.
FIG. 14 is a perspective view when the disposal state of the foot switch of FIG. 13 is viewed from the vehicle body left rear.
FIG. 15 is a partial enlarged view of the motorcycle illustrating the third disposal position of the foot switch.
FIG. 16 is a schematic drawing illustrating various disposal positions of the foot switch of a case of not including the side kickstand.
FIG. 17 is a schematic drawing illustrating various disposal positions of the foot switch of a case of including the side kickstand.

### [Description of Embodiment]

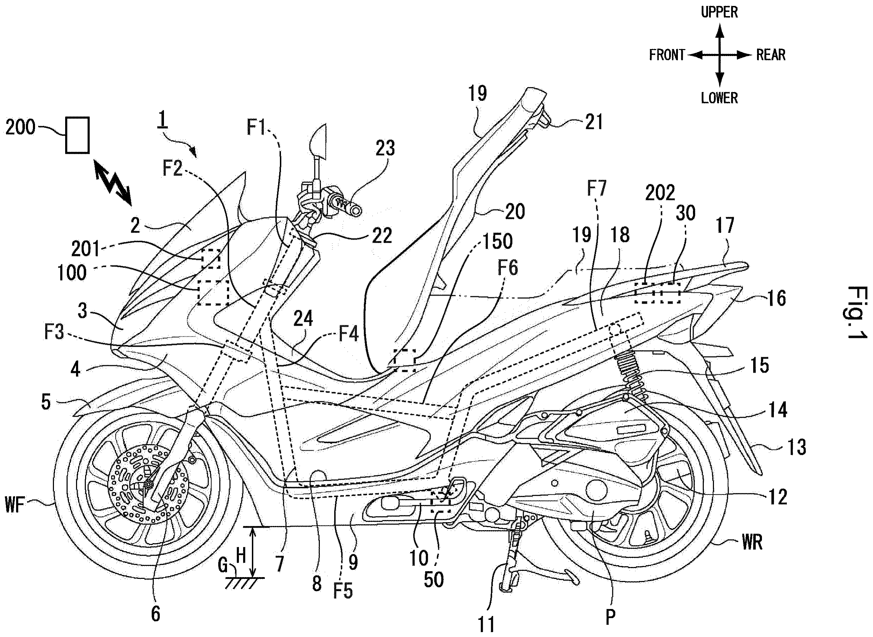

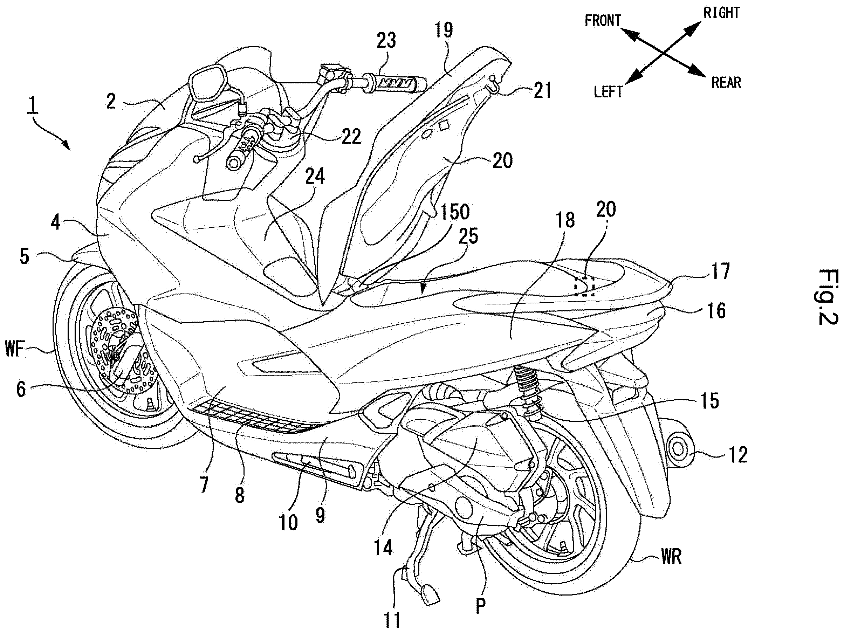

Hereinafter, a preferable embodiment of the present invention will be explained in detail referring to the drawings. FIG. 1 is a left side view of a motorcycle 1 related to an embodiment of the present invention. Also, FIG. 2 is a perspective view of the motorcycle 1. The motorcycle 1 is the saddle riding type vehicle of a scooter type where a pair or left and right low-slung steps 8 are arranged between a steering handlebar 23 and a seat 19, a rider placing his/her feet on the steps 8. To the front end portion of a main frame F4 made of a steel pipe, a head pipe F2 is fixed, the head pipe F2 pivotally supporting a steering stem F1 in a turnable manner. A handlebar holder 22 supporting the steering handlebar 23 is fixed to an upper end portion of the steering stem F1, and a bottom bridge F3 is fixed to the other lower end portion. A pair of left and right front forks 6 are fixed to the bottom bridge F3, the front forks 6 pivotally supporting a front wheel WF in a rotatable manner, and a front fender 5 is attached to the front forks 6, the front fender 5 covering the upper side of the front wheel WF.

The main frame F4 extending vehicle body downward to the rear from the head pipe F2 continues to an under frame F5 that is directed vehicle body rearward. A rear frame F7 extending vehicle body rearward is connected to the rear end portion of the under frame F5, and a reinforcement pipe F6 is disposed between the main frame F4 and the rear frame F7. A unit swing type power unit P that is configured of an engine and a transmission in an integral manner is pivotally supported in a swingable manner by the rear end portion of the under frame F5. The rear end portion of the power unit P pivotally supporting a rear wheel WR as a driving wheel in a rotatable manner is suspended from the rear frame F7 through a rear cushion 15. An air cleaner box 14 is disposed in the upper portion of the power unit P.

The vehicle body front side of the head pipe F2 is covered by a front cowl 4 that includes an opening portion, the light emission surface of a head light 3 facing the opening portion to the front. The vehicle body rear side of the head pipe F2 is covered by a rear cover 24 that is disposed to oppose the front of the feet of the occupant. A windshield screen 2 is disposed above the head light 3. A floor cowl 7 is connected to the lower portion of the rear cover 24, the floor cowl 7 standing from the end portion on the inner side in the vehicle width direction of the steps 8. A pair of left and right rear cowls 18 covering the rear frame F7 are connected to the rear upper portion of the floor cowl 7. An under cowl 9 extended vehicle body downward is connected to the outer side in the vehicle width direction of the step 8.

The motorcycle 1 includes a main stand 11 and a side kickstand 10 as a stand device supporting the vehicle body at the time of being stopped, the main stand 11 being arranged in the lower portion of the power unit P, the side kickstand 10 being arranged in the vicinity of the under cowl 9 on the vehicle body left side. Also, many vehicles include only the main stand 11 as a standard component with the side kickstand 10 being made a retrofit component.

A grab bar 17 is attached to the rear portion of the rear cowls 18, the occupant holding the grab bar 17, and a tail lamp device 16 is disposed below the grab bar 17. A rear fender 13 is disposed below the tail lamp device 16.

A storage portion 25 is arranged in the lower portion of the seat 19, the storage portion 25 being capable of storing goods such as a helmet. The seat 19 is made openable/closable by a hinge mechanism 150 that is positioned at the front end of the seat 19, and functions as a lid member that covers an upper opening of the storage portion 25. A hook 21 is arranged in a bottom plate 20 of the seat 19, the hook 21 engaging with a seat catch mechanism 30 as a locking mechanism, and an actuator 202 for unlocking the seat catch mechanism 30 is disposed in the vicinity of the seat catch mechanism 30. Also, a communication antenna 201 and an ECU 100 are disposed in front of the head pipe F2, the communication antenna 201 executing wireless communication with a smart key 200 as a wireless portable key carried by the occupant, the ECU 100 being as a control unit.

The motorcycle 1 includes a foot switch 50 operated by the occupant with his/her foot, and is configured that, when the smart key 200 operates the foot switch 50 by the ECU 100 in an authenticatable state, the actuator 202 drives the seat catch mechanism 30, and the seat 19 is opened. According to the present embodiment, the hinge mechanism 150 is provided with a spring that energizes the seat 19 to the opening direction, and the seat 19 comes to open automatically to a predetermined angle when the hook 21 is released from the seat catch mechanism 30.

The foot switch 50 as an unlocking operation portion can be disposed at various positions near the lower portion of the motorcycle 1. In particular, as a position facilitating operation by the toe of the foot and the like and not grounding when the motorcycle 1 rides over a step, a range between the hinge mechanism 150 and the vehicle body bottom portion that forms the minimum ground clearance H in the vehicle body vertical direction is selected. Also, in this motorcycle 1, the bottom portion of the under cowl 9 has a shape of gradually rising to the rear as it goes vehicle body rearward from the vehicle body front end portion, and the minimum ground clearance H becomes a height dimension from the ground surface G measured at the frontend portion of the under cowl 9.

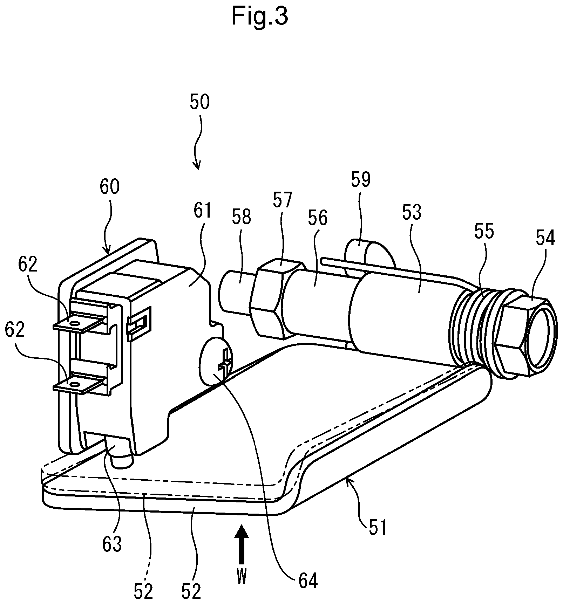

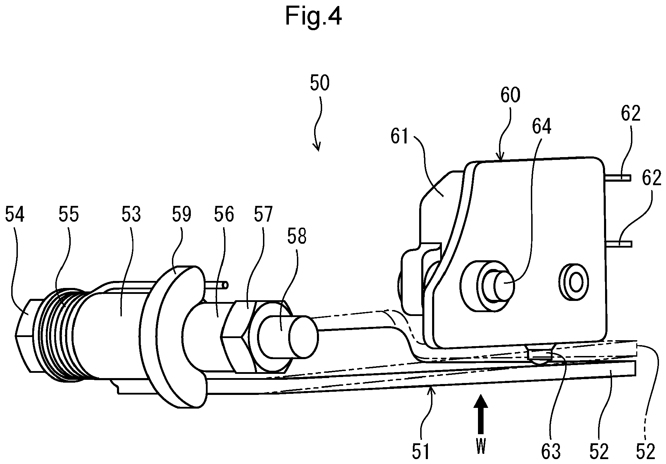

FIG. 3 and FIG. 4 are perspective views of the foot switch 50. The foot switch 50 includes an operation portion 51 and a switch unit 60, the occupant pressingly operating the operation portion 51 by his/her foot, the switch unit 60 being switched to the ON state when the operation portion 51 is pressed. The operation portion 51 configured of metal, hard resin, and the like includes a plate-like portion 52 and a cylindrical portion 53 that is arranged at the end portion of the plate-like portion 52. To one side of a thin sheet configuring the plate-like portion 52, a curved shape is given which prevents catching of the shoe and so on.

A spring holding member 56 is inserted to the cylindrical portion 53, the spring holding member 56 being provided with a stopper portion 59 that abuts on the end portion of the spring 55 and the plate-like portion 52 respectively, and a nut 57 is screwed to the end portion of a bolt 54 that penetrates the spring holding member 56. By this configuration, the operation portion 51 is pivotally supported so as to be swingable around a shaft portion 58 of the bolt 54, and is energized to a position where the switch unit 60 is turned off by a resilient force of the spring 55.

The switch unit 60 configured of a tactile switch and the like switching on/off by the contact state of an inner contact includes a projecting/retracting element 63 and a pair of contacts 62, the projecting/retracting element 63 being energized to the direction of protruding from a body portion 61, the contacts 62 outputting an ON-signal that is generated by retraction of the projecting/retracting element 63. When the occupant presses the plate-like portion 52 by his/her foot, the projecting/retracting element 63 retracts, and the foot switch 50 outputs an ON-signal. Also, when the occupant stops the pressing operation, the projecting/retracting element 63 and the plate-like portion 52 return to the original position, and the foot switch 50 is switched off. Since a tactile switch is used, the production cost of the foot switch 50 is reduced by using a switch having a simple configuration, and comfortable moderate feeling can be imparted to operation of the foot switch by using a switch whose projecting/retracting element reciprocatingly moves.

The foot switch 50 is attached to each portion of the vehicle body using an attaching screw 64 of the switch unit 60, the bolt 54, and the like in a state of maintaining the mutual positional relation illustrated in FIG. 3 and FIG. 4. Further, it is also possible to store the switch unit 60 and the operation portion 51 in a container-like housing, and to attach this housing to the vehicle body.

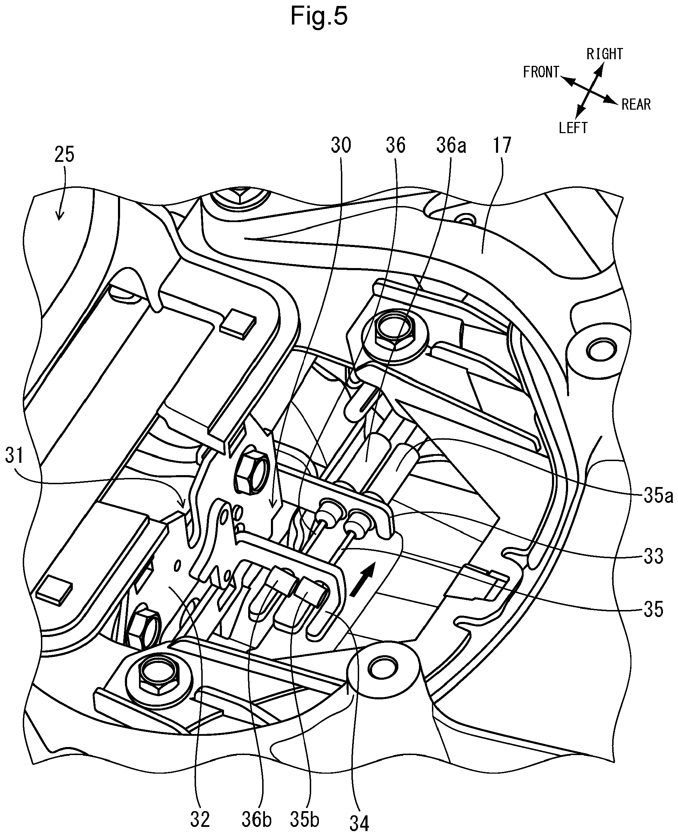

FIG. 5 is a perspective view illustrating the seat catch mechanism 30 and its surrounding structure. The seat catch mechanism 30 holding the hook 21 arranged in the bottom plate 20 of the seat 19 is disposed below the seat 19 and behind the storage portion 25. The seat catch mechanism 30 includes a base plate 32 and a lock plate 34, the base plate 32 being formed with a hook engagement groove 31, the lock plate 34 being pivotally supported by the base plate 32 in a swingable manner. A lock piece 35b of a first cable 35 pulled by the actuator 202 and a lock piece 36b of a second cable 36 pulled by a manual lever not illustrated engage with the lock plate 34. Also, outer tubes 35a, 36a of respective cables 35, 36 are supported by a support plate 33 that is fixed to the base plate 32.

By the configuration described above, when the seat 19 is closed and is pressed from the above, the hook 21 inserted to the engagement groove 31 is held by the lock plate 34 and becomes a locked state. Also, when the first cable 35 or the second cable 36 is pulled and the lock plate 34 swings, the hook 21 is released and comes to be switched to an unlocked state.

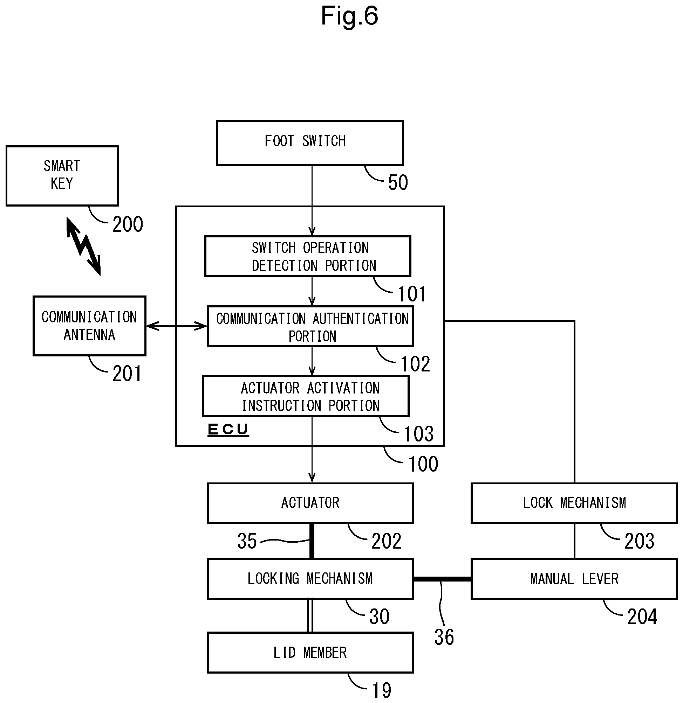

FIG. 6 is a block diagram illustrating an overall configuration of the unlocking system by the foot switch 50. Although a switch for opening the seat 19 can be arranged in the smart key 200 in addition to the main switch of the motorcycle 1 and a switch for locking/unlocking the lock mechanism of the operation lever, there is also a case that the smart key 200 is hardly operated due to the state both hands are full of goods and so on. On the other hand, according to the invention of the present application, since the seat 19 opens when the foot switch 50 is operated by the foot without operating the smart key 200, usability of the storage portion 25 can be improved.

The ECU 100 includes a switch operation detection portion 101, a communication authentication portion 102, and an actuator activation instruction portion 103, the switch operation detection portion 101 detecting the operation state of the foot switch 50, the communication authentication portion 102 being connected to the communication antenna 201, the actuator activation instruction portion 103 activating the actuator 202 when a predetermined condition is fulfilled.

When operation of the foot switch 50 is detected by the switch operation detection portion 101, authentication of the smart key 200 is started by the communication authentication portion 102. The actuator activation instruction portion 103 activates the actuator 202 responding completion of the authentication. Also, since the first cable 35 is pulled by the actuator 202, the seat catch mechanism 30 releases the hook 21, and the seat 19 comes to open to the predetermined angle.

A manual lever 204 pulling the second cable 36 connected to the seat catch mechanism 30 is arranged adjacently to the main switch that is arranged in the rear cover 24 for example, and cannot be operated unless a lock mechanism 203 is unlocked accompanying authentication completion of the smart key 200. Therefore, in order to open the seat 19 by the manual lever 204, it is required to operate both of the smart key 200 and the manual lever 204. Also, even when a switch for opening the seat 19 is arranged in the smart key 200, it is required to operate the smart key 200. On the other hand, according to the foot switch 50 related to the invention of the present application, it is possible to get access to the storage portion 25 by one operation without operating the smart key 200. Further, since mutual authentication is started after operation of the foot switch 50 is detected, power consumption of the smart key 200 can be suppressed compared to a method of constantly executing mutual authentication within a range where wireless communication is possible for example.

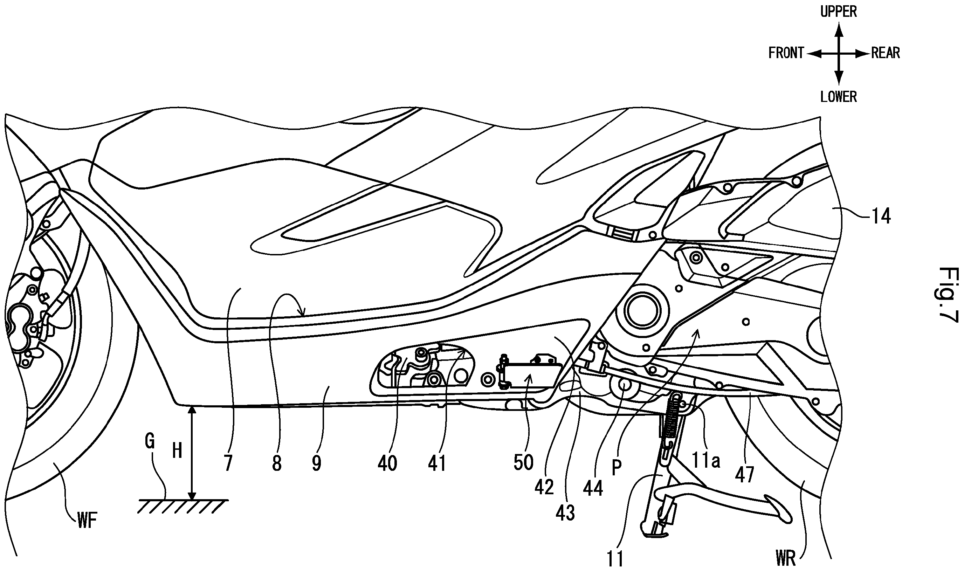

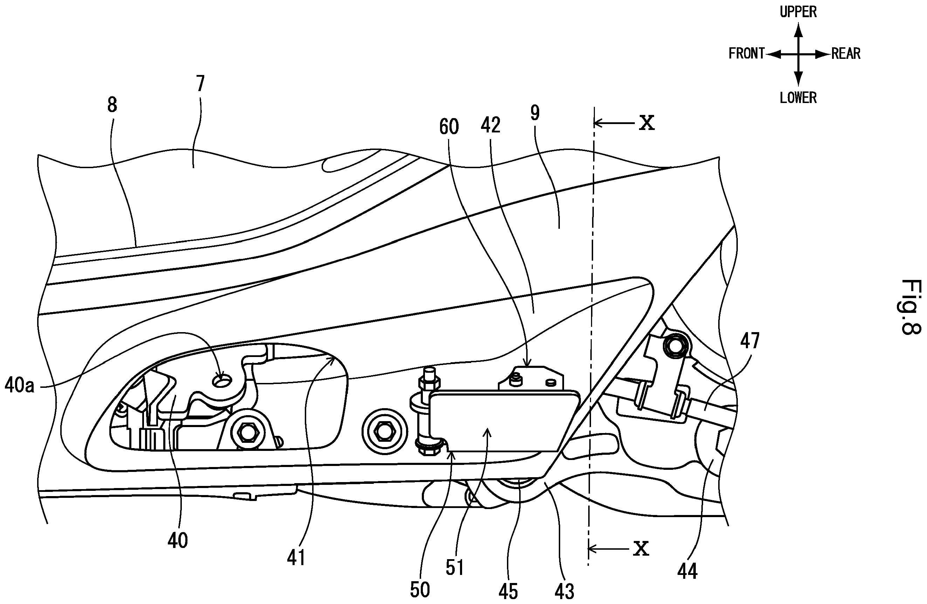

FIG. 7 is a partial enlarged left side view of the motorcycle 1 illustrating the first disposal position of the foot switch 50. Also, FIG. 8 is a partial enlarged view of FIG. 7. An opening 41 is arranged on the left side in the vehicle width direction of the under cowl 9, the opening 41 exposing a support plate 40 outward, the support plate 40 pivotally supporting the side kickstand 10 (refer to FIG. 1), and a recessed portion 42 is formed behind the opening 41, the recessed portion 42 being curved inward in the vehicle width direction in order to prevent the side kickstand 10 stored from interfering the under cowl 9. The support plate 40 is fixed to the under frame F5 that is covered by the under cowl 9.

In the bottom portion of the power unit P positioned behind the under cowl 9, the main stand 11 is pivotally supported in a swingable manner by a rotary shaft 11a. Also, the front end of an arm portion 43 extending forward of the lower end of the power unit P is pivotally supported by the rear end portion of the under frame F5 through a pivot 45. On the side surface on the left side in the vehicle width direction between the arm portion 43 and the main stand 11, an oil strainer cover 44 is arranged, and a brake wire 47 of a rear wheel brake is cabled so as to be directed in the vehicle longitudinal direction. This drawing illustrates an example where the foot switch 50 is disposed at a position near a rear and lower portion of the recessed portion 42 formed in the under cowl 9 when the motorcycle 1 does not include the side kickstand 10.

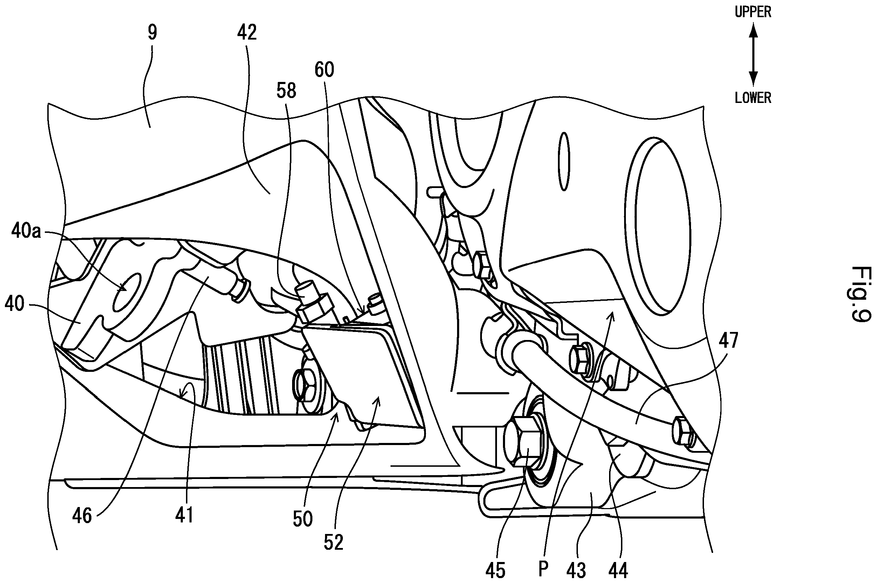

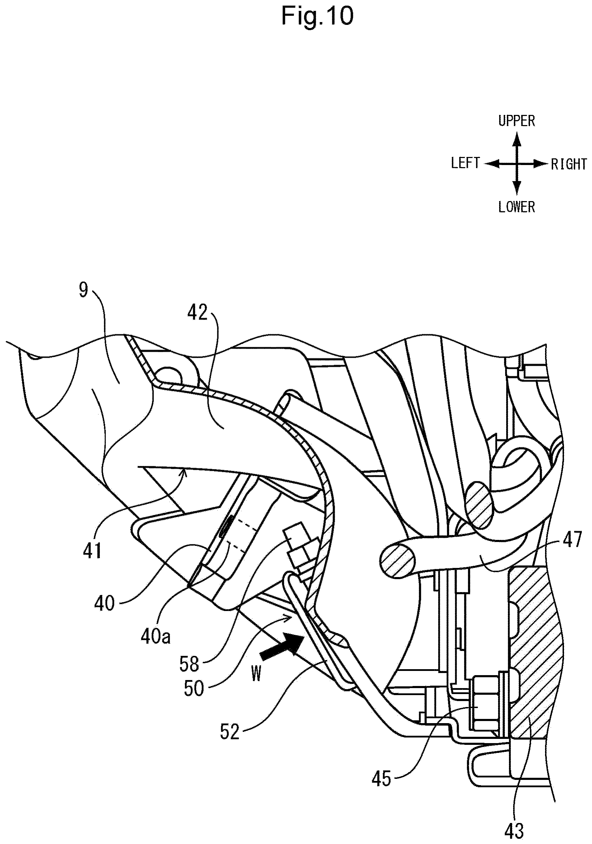

FIG. 9 is a perspective view when the disposal state of the foot switch 50 of FIG. 7 is viewed from the vehicle body left rear. Also, FIG. 10 is a cross-sectional view taken along the line X-X of FIG. 8. A through hole 40a is formed in the support plate 40 that is exposed outward from the opening 41 of the outer cowl 9, a swing shaft (not illustrated) of the side kickstand 10 passing through the through hole 40a, and an engagement bar 46 is arranged on the rear surface side of the support plate 40, the engagement bar 46 engaging with the end portion of a spring (not illustrated) that keeps the side kickstand 10 at the stored/extended positions.

As described above, the foot switch 50 is disposed in the rear lower portion of the recessed portion 42 that is formed behind the opening 41 and inclines so that the upper end portion of the shaft portion 58 is positioned on the outer side in the vehicle width direction of the lower end portion of the shaft portion 58, and thereby it is configured that the plate-like portion 52 inclines along the outermost surface of the under cowl 9. By this configuration, the occupant stands on the left side of the motorcycle 1, moves the toe so as to be raised obliquely forward, and can thereby pressingly operate the foot switch 50.

Since the area of the plate-like portion 52 of the foot switch 50 is wide and the foot switch 50 is switched on with a small stroke, the foot switch 50 can be operated not only by a natural motion of raising the toe obliquely forward and applying a load W but also by pushed out the toe in the vehicle width direction or kicking up the toe upward in the vertical direction. Further, it is possible to form an attaching portion in the under cowl 9 to fix the foot switch 50, and to fix the foot switch 50 to a stay that is extended from the under frame F5.

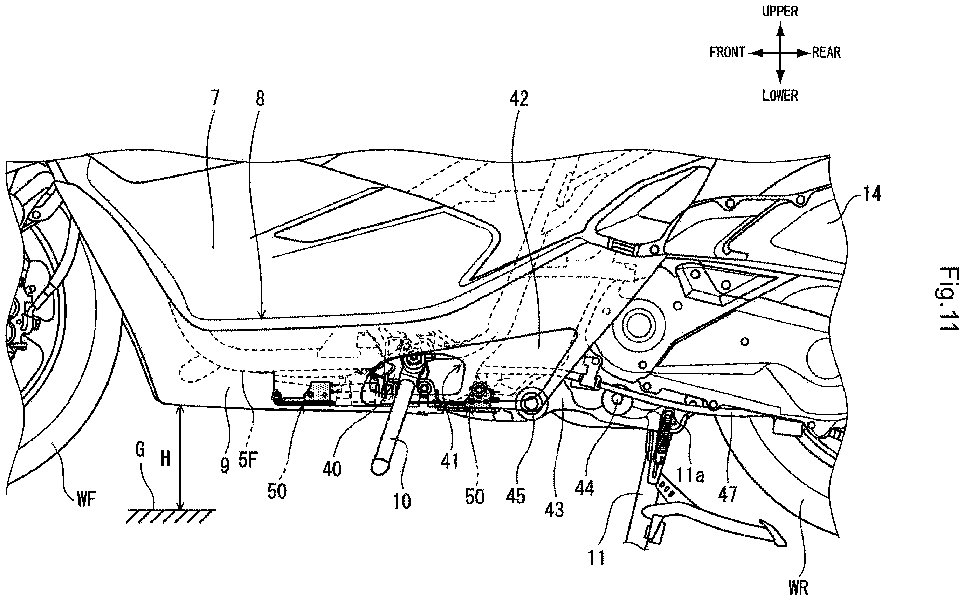

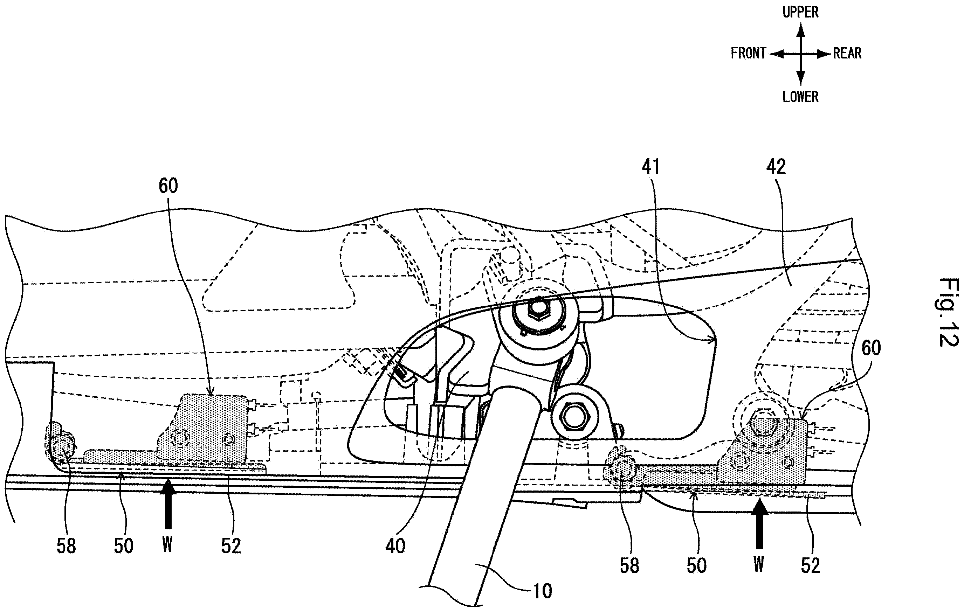

FIG. 11 is a partial enlarged left side view of the motorcycle 1 illustrating the second disposal position of the foot switch 50. Also, FIG. 12 is a partial enlarged view of FIG. 11. This second disposal position is featured particularly in terms that, when the side kickstand 10 is arranged, the foot switch 50 is disposed in the vicinity of the side kickstand 10, the shaft portion 58 that is a swing shaft of the plate-like portion 52 is directed in the vehicle width direction, and thereby the plate-like portion 52 is pressed upward in the vertical direction to activate the foot switch 50.

The foot switch 50 is positioned on the vehicle body front side or the vehicle body rear side of the side kickstand 10 in a state the side kickstand 10 pivotally supported by the support plate 40 is extended. At this time, the plate-like portion 52 is exposed to the vehicle body bottom surface side, but is covered by the under cowl 9 in the vehicle body side view and becomes a state of being hardly viewed from the outside. Also, when the motorcycle 1 is stopped using the side kickstand 10, the vehicle body inclines to the side of the side kickstand 10, therefore the plate-like portion 52 comes to be further hardly viewed from the outside, and operation of the foot switch 50 by a third party can be prevented. The foot switch 50 in the second disposal position is fixed to the under frame F5 at a position inside the under cowl 9.

Further, when the occupant is to try to get access to the storage portion 25, it is assumed that the occupant stands in the vicinity of the front of the side kickstand 10 on the vehicle body left side. Therefore, the foot switch 50 is operated easily by the left foot when the foot switch 50 is disposed on the vehicle body front side of the side kickstand 10, whereas operation by the right foot becomes easy when the foot switch 50 is disposed on the vehicle body rear side of the side kickstand 10.

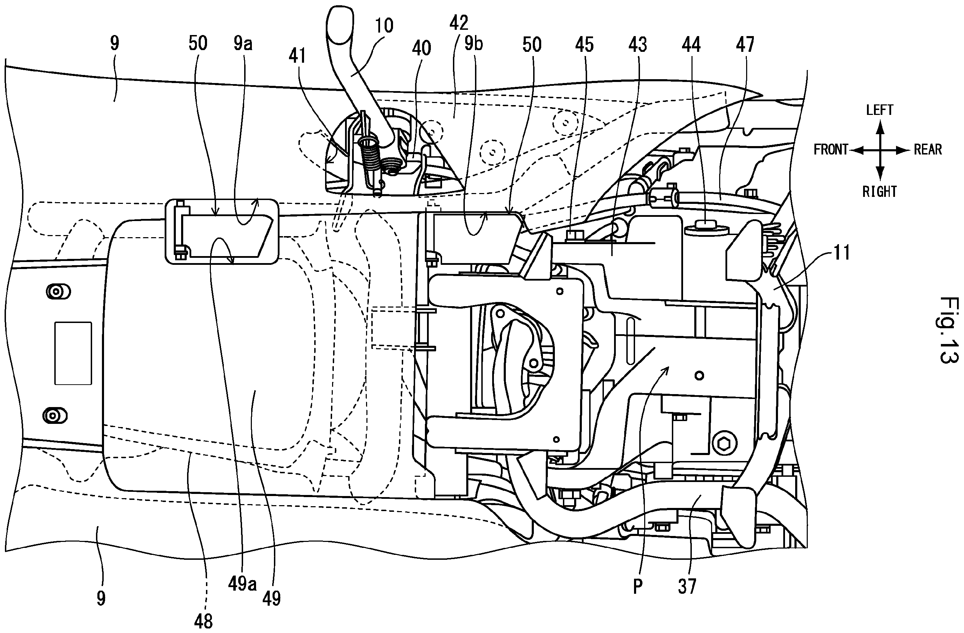

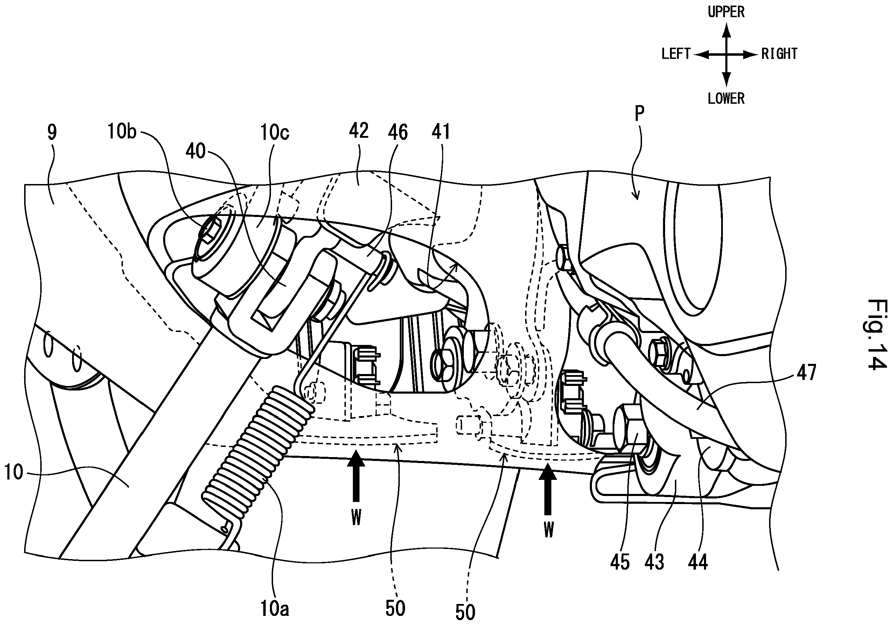

FIG. 13 is a bottom view of the motorcycle 1 illustrating the second disposal position of the foot switch 50. Also, FIG. 14 is a perspective view when the disposal state of the foot switch 50 of FIG. 13 is viewed from the vehicle body left rear. On the right side in the vehicle width direction of the power unit P, an exhaust pipe 37 is disposed, the exhaust pipe 37 being connected to an exhaust port that opens vehicle body downward of the engine. On the vehicle body front side of the exhaust port, an under guard 49 as an exterior component that connects the left and right under cowls 9 to each other and covers the lower portion of a fuel tank 48 is provided.

The side kickstand 10 is pivotally supported in a swingable manner by the support plate 40 through a bolt 10b, and the end portion of a spring 10a engages with the engagement bar 46. The bolt 10b functions also as a support member of a side kickstand switch 10c that detects the storing/extending state of the side kickstand 10.

In order to avoid interference with the side kickstand 10 and to allow the plate-like portion 52 to be directed generally horizontally, the foot switch 50 is disposed at a position on the inner side in the vehicle width direction where the under cowl 9 becomes generally horizontal without inclination. When the foot switch 50 is to be disposed on the vehicle body front side of the side kickstand 10, the plate-like portion 52 is made to be exposed downward from the opening that is configured by a notch 9a of the under cowl 9 and a notch 49a of the under guard 49. On the other hand, when the foot switch 50 is to be disposed on the vehicle body rear side of the side kickstand 10, the plate-like portion 52 is disposed on the inner side in the vehicle width direction of a notch 9b of the under cowl 9. Thus, the foot switch 50 can be activated by that the occupant pressingly operate the toe in a scraping up manner.

Also, even when the disposal positions described above are employed, by positioning the lower surface of the plate-like portion 52 above the lower surface of the under cowl 9 and the under guard 49, such event can be prevented that the foot switch 50 is activated even when the under cowl 9 and the under guard 49 are grounded by a step and the like.

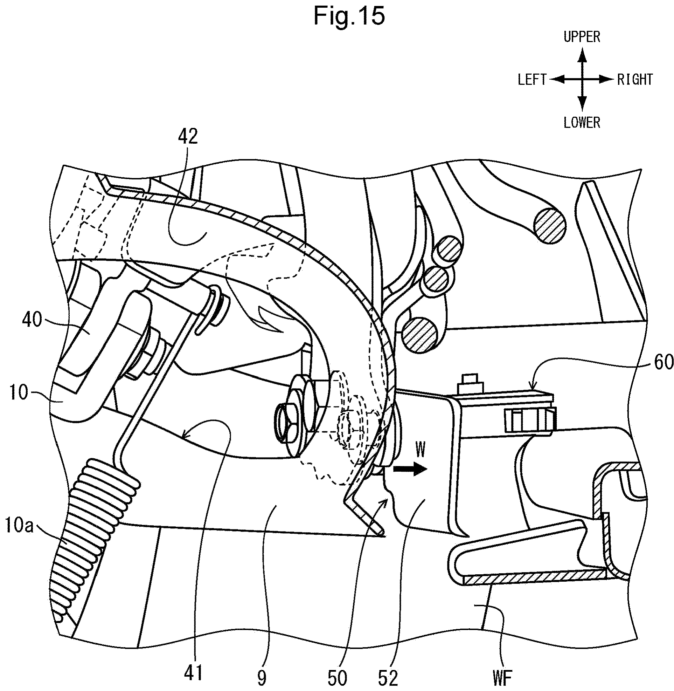

FIG. 15 is a partial enlarged view of the motorcycle 1 illustrating the third disposal position of the foot switch 50. This third disposal position is featured in terms that the foot switch 50 is disposed in the vicinity of the side kickstand 10, the shaft portion 58 that is a swing shaft of the plate-like portion 52 is directed in the vertical direction, and thereby the plate-like portion 52 is pressed inward in the vehicle width direction to activate the foot switch 50. In an example of this drawing, the plate-like portion 52 is disposed at a position on the vehicle body rear side of the side kickstand 10 and on the inner side in the vehicle width direction of the under cowl 9, and the occupant comes to insert the toe between the under cowl 9 and the plate-like portion 52 and to operate the foot switch 50 by the bottom portion of the toe so as to extend the ankle. According to this third disposal position, since the flat surface portion of the plate-like portion 52 is directed in the vehicle width direction and is stored inside the under cowl 9, the foot switch 50 can be protected against flying stones and the like, and erroneous activation at the time of riding over a step and operation by a third party can also be prevented.

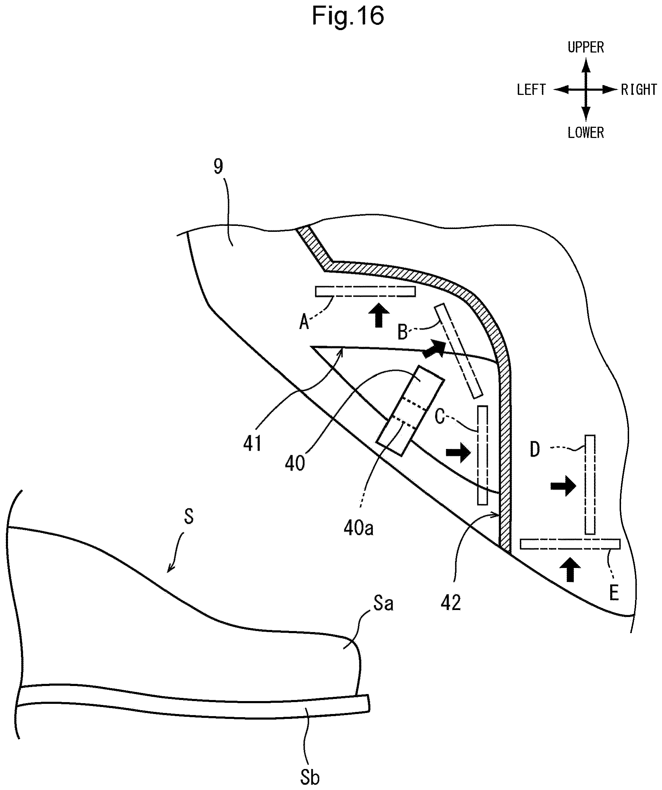

FIG. 16 is a schematic drawing illustrating various disposal positions of the foot switch 50 of a case of not including the side kickstand 10. This drawing illustrates a state as viewed from the vehicle body rear side similarly to the cross-sectional drawing of FIG. 10. Each reference sign of A, B, C, D, E shows the position of the plate-like portion 52 of the foot switch 50, and bold arrows show the pressing direction of the plate-like portion 52.

When the side kickstand 10 is not included, the foot switch 50 can be disposed at the position A, position B, position C, and the like of the vehicle body rear of the support plate 40 effectively utilizing a space of the recessed portion 42 formed in the under cowl 9 in order to avoid interference with the side kickstand 10. In this case, the direction of pressing operation by a shoe S is within the range of generally 90 degrees from inward in the vehicle width direction to upward in the vertical direction, and becomes suitable for operation of pushing or scraping up by a toe Sa.

The position D corresponds to the third disposal position described above, and the position E corresponds to the second disposal position described above. Both of the position D and the position E may be a position offset in the vehicle longitudinal direction of the support plate 40 in the vehicle body side view or a position below the support plate 40. As described above, the position D is suitable to pressing operation by a bottom portion Sb close to the toe Sa of the shoe S, and the position E is suitable to scraping up operation by the toe Sa.

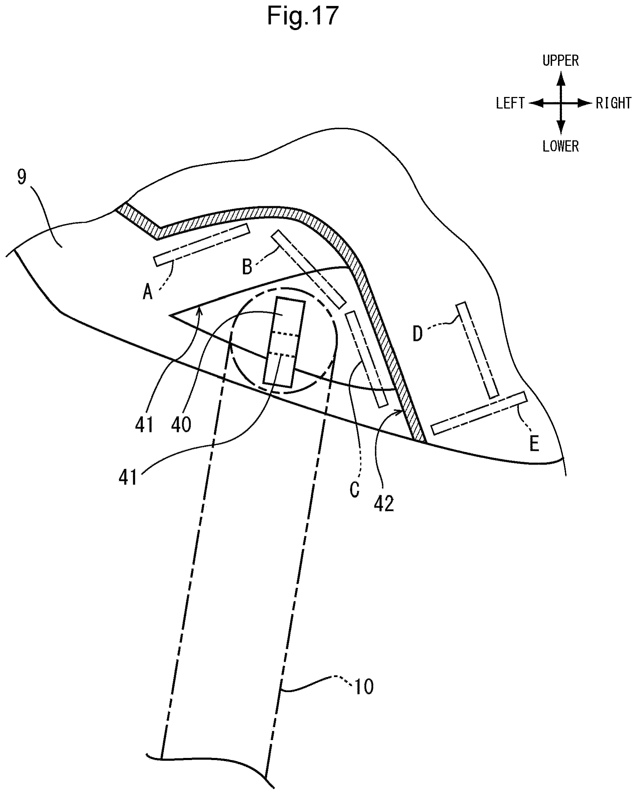

FIG. 17 is a schematic drawing illustrating various disposal positions of the foot switch 50 of a case of including the side kickstand 10. According to the shape of the under cowl 9 and the configuration of the foot switch 50, even when the side kickstand 10 is included, the foot switch 50 can be disposed at positions similar to A to E illustrated in FIG. 16. Between the position A to the position C in particular, when the side kickstand 10 is stored, the foot switch 50 comes to be covered by the side kickstand 10, and the foot switch 50 can be protected against the flying stone and the like during traveling. Also, at the position D and the position E, the foot switch 50 can be protected by twofold protection of the side kickstand 10 and the under cowl 9.

Also, when the plate-like portion 52 is to be directed to the vehicle width direction as done at the position A and the position E, the foot switch 50 may be disposed so that the plate-like portion 52 becomes generally horizontal in a state the vehicle body inclines by the side kickstand 10. Further, in any disposal position of the foot switch 50 described above, since the foot switch 50 is disposed on the vehicle front side of the main stand 11, the foot switch 50 can be disposed effectively utilizing a space in front of the main stand 11.

Also, the structure and the size of the foot switch, the shape and the structure of the switch unit, the shape of the plate-like portion, the shape and the layout of the storage unit, the form of the ECU and the smart key, and so on are not limited to the embodiment described above, and various modifications are possible. For example, the storage portion under the seat may be made a battery storage space for an electric vehicle. Also, the storage portion is not limited to the space under the seat of the scooter type motorcycle, and can be made a small article storage space provided in the vehicle body front portion, a trunk and a panier case attached to the vehicle body rear portion, and so on. Further, the lid member opened by operation of the foot switch is not only the lid member covering the opening of the storage portion but may be a lid of the filler opening, and so on. The configuration of the foot switch, the storage portion, and the like related to the present invention can be applied not only to a motorcycle but also to saddle riding type vehicles such as a three wheeled vehicle including two front wheels.

### [Reference Signs List]

1...motorcycle (saddled vehicle), 9...under cowl, 10...side kickstand, 19...seat(lid member), 21...hook, 25...storage portion, 30...seat catch mechanism(locking mechanism), 35...first cable(cable), 34...lock plate, 50...foot switch(unlocking operation portion), 52...plate-like portion, 63...projecting/retracting element, 100...ECU(control unit), 101...switch operation detection portion, 102... communication authentication portion, 103... actuator activation instruction portion, 150...hinge mechanism, 200...smart key, 201...communication antenna, 202...actuator, F5...under frame, G...ground surface, H...minimum ground clearance

## Claims

1. (amended) A saddle riding type vehicle (1) provided with a storage portion (25) that includes a lockable lid member (19), the saddle riding type vehicle (1) comprising:
a smart key (200) authenticated by a control unit (100) arranged in the saddle riding type vehicle (1) by way of wireless communication;
a locking mechanism (30) locking and unlocking the lid member (19);
an unlocking operation portion (50) transmitting an unlocking signal to the control unit (100); and
an actuator (202) connected to the locking mechanism (30) and driven according to an instruction of the control unit (100), wherein
the unlocking operation portion (50) is disposed at a position higher than a minimum ground clearance (H) of the saddle riding type vehicle (1) and lower than a hinge mechanism (150) that openably/closably supports the lockable lid member (19) being a seat of the saddle riding type vehicle (1),
the control unit (100) drives the actuator (202) to switch the locking mechanism (30) to an unlocked state when the unlocking operation portion (50) is operated, an unlocking signal is thereby transmitted, and authentication of the smart key (200) is completed,
a side kickstand (10) allowing a vehicle body to self-stand in an inclined state is provided,
the unlocking operation portion (50) is disposed in the vicinity of the side kickstand (10) in a vehicle body side view, and
the locking mechanism (30) is switched to a locked state by holding a hook (21) provided on the lid member (19) by a lock plate (34) that is swingable, and is switched to an unlock state by that, when the actuator (202) is driven, a cable (35) connected to the actuator (202) is pulled, the lock plate (34) swings, and the hook (21) is released.

2. The saddle riding type vehicle according to claim 1, wherein
the motorcycle (1) includes an under frame (F5) and an under cowl (9), the under frame (F5) being disposed in the lower portion of a vehicle body, the under cowl (9) covering an exterior of the under frame (F5), and
the unlocking operation portion (50) is fixed to the under frame (F5) at a position inside the under cowl (9).

3. A saddle riding type vehicle (1) provided with a storage portion (25) that includes a lockable lid member (19), the saddle riding type vehicle (1) comprising:
a smart key (200) authenticated by a control unit (100) arranged in the saddle riding type vehicle (1) by way of wireless communication;
a locking mechanism (30) locking and unlocking the lid member (19);
an unlocking operation portion (50) transmitting an unlocking signal to the control unit (100); and
an actuator (202) connected to the locking mechanism (30) and driven according to an instruction of the control unit (100), wherein
the unlocking operation portion (50) is disposed at a position higher than a minimum ground clearance (H) of the saddle riding type vehicle (1) and lower than a hinge mechanism (150) that openably/closably supports the lockable lid member (19) being a seat of the saddle riding type vehicle (1),
the control unit (100) drives the actuator (202) to switch the locking mechanism (30) to an unlocked state when the unlocking operation portion (50) is operated, an unlocking signal is thereby transmitted, and authentication of the smart key (200) is completed,
a side kickstand (10) allowing a vehicle body to self-stand in an inclined state is provided,
the unlocking operation portion (50) is disposed in the vicinity of the side kickstand (10) in a vehicle body side view, and
the unlocking operation portion (50) includes a plate-like portion (52) and a switch unit (60), an occupant pressing the plate-like portion (52) by his/her foot, the switch unit (60) being switched on when the plate-like portion (52) is pressed and a projecting/retracting element (63) thereby comes to a retracted state.

4. The saddle riding type vehicle according to claim 3, wherein
the unlocking operation portion (50) is disposed so that the switch unit (60) is switched on by that the plate-like portion (52) is pressed vehicle body upward.

5. The saddle riding type vehicle according to claim 3, wherein
the unlocking operation portion (50) is disposed so that the switch unit (60) is switched on by that the plate-like portion (52) is pressed inward in the vehicle body width direction.

6. The saddle riding type vehicle according to any one of claims 1 to 5, wherein
the unlocking operation portion (50) is covered by the side kickstand (10) in a vehicle body side view when the side kickstand (10) is stored.

## Patentansprüche

1. Sattelaufsitzfahrzeug (1), das mit einem Aufbewahrungsabschnitt (25) versehen ist, der ein abschließbares Deckelelement (19) enthält, wobei das Sattelaufsitzfahrzeug (1) umfasst:
einen intelligenten Schlüssel (200), der durch eine in dem Sattelaufsitzfahrzeug (1) angeordnete Steuereinheit (100) mittels drahtloser Kommunikation authentisiert wird;
einen Schließmechanismus (30), der das Deckelelement (19) abschließt und aufschließt;
einen Aufschließbedienungsabschnitt (50), der zu der Steuereinheit (100) ein Aufschließsignal sendet; und
einen Aktuator (202), der mit dem Schließmechanismus (30) verbunden ist und gemäß einer Anweisung der Steuereinheit (100) angetrieben wird, wobei
der Aufschließbedienungsabschnitt (50) an einer höheren Position angeordnet ist als eine minimale Bodenfreiheit (H) des Sattelaufsitzfahrzeugs (1) und niedriger als ein Gelenkmechanismus (150), der das abschließbare Deckelelement (19), das ein Sitz des Sattelaufsitzfahrzeugs (1) ist, öffen/schließbar lagert,
die Steuereinheit (100) den Aktuator (202) antreibt, um den Schließmechanismus (30) zu einem aufgeschlossenen Zustand zu schalten, wenn der Aufschließbedienungsabschnitt (50) betätigt wird, hierdurch ein Aufschließsignal gesendet wird und die Authentisierung des intelligenten Schlüssels (200) abgeschlossen wird,
ein Seitenklappständer (10) vorgesehen ist, der erlaubt, dass ein Fahrzeugkörper in einem geneigten Zustand von selbst steht,
der Aufschließbedienungsabschnitt (50), in Fahrzeugkörper-Seitenansicht, in der Nähe des Seitenklappständers (10) angeordnet ist, und
der Schließmechanismus (30) zu einem abgeschlossenen Zustand geschaltet wird, in dem ein an dem Deckelelement (19) vorgesehener Haken (21) durch eine schwenkbare Schließplatte (34) gehalten wird, und zu einem aufgeschlossenen Zustand geschaltet wird, indem, wenn der Aktuator (202) angetrieben wird, ein mit dem Aktuator (202) verbundenes Kabel (35) gezogen wird, die Schließplatte (34) schwenkt und der Haken (21) gelöst wird.

2. Das Sattelaufsitzfahrzeug nach Anspruch 1, wobei
das Motorrad (1) einen unteren Rahmen (F5) und eine untere Verkleidung (9) enthält, wobei der untere Rahmen (F5) in dem unteren Abschnitt eines Fahrzeugkörpers angeordnet ist, wobei die untere Verkleidung (9) eine Außenseite des unteren Rahmens (F5) abdeckt, und
der Aufschließbedienungsabschnitt (50) an dem unteren Rahmen (F5) an einer Position innerhalb der unteren Verkleidung (9) befestigt ist.

3. Sattelaufsitzfahrzeug (1), das mit einem Aufbewahrungsabschnitt (25) versehen ist, der ein abschließbares Deckelelement (19) enthält, wobei das Sattelaufsitzfahrzeug (1) umfasst:
einen intelligenten Schlüssel (200), der durch eine in dem Sattelaufsitzfahrzeug (1) angeordnete Steuereinheit (100) mittels drahtloser Kommunikation authentisiert wird;
einen Schließmechanismus (30), der das Deckelelement (19) abschließt und aufschließt;
einen Aufschließbedienungsabschnitt (50), der zu der Steuereinheit (100) ein Aufschließsignal sendet; und
einen Aktuator (202), der mit dem Schließmechanismus (30) verbunden ist und gemäß einer Anweisung der Steuereinheit (100) angetrieben wird, wobei
der Aufschließbedienungsabschnitt (50) an einer höheren Position angeordnet ist als eine minimale Bodenfreiheit (H) des Sattelaufsitzfahrzeugs (1) und niedriger als ein Gelenkmechanismus (150), der das abschließbare Deckelelement (19), das ein Sitz des Sattelaufsitzfahrzeugs (1) ist, öffen/schließbar lagert,
die Steuereinheit (100) den Aktuator (202) antreibt, um den Schließmechanismus (30) zu einem aufgeschlossenen Zustand zu schalten, wenn der Aufschließbedienungsabschnitt (50) betätigt wird, hierdurch ein Aufschließsignal gesendet wird und die Authentisierung des intelligenten Schlüssels (200) abgeschlossen wird,
ein Seitenklappständer (10) vorgesehen ist, der erlaubt, dass ein Fahrzeugkörper in einem geneigten Zustand von selbst steht,
der Aufschließbedienungsabschnitt (50), in Fahrzeugkörper-Seitenansicht, in der Nähe des Seitenklappständers (10) angeordnet ist, und
der Aufschließbedienungsabschnitt (50) einen plattenartigen Abschnitt (52) und eine Schaltereinheit (60) enthält, wobei, wenn ein Fahrer mit seinem Fuß auf den plattenartigen Abschnitt (52) drückt, die Schaltereinheit (60) eingeschaltet wird, wenn der plattenartige Abschnitt (52) gedrückt wird, und hierdurch ein Ausfahr/Einfahrelement (63) in einen eingefahrenen Zustand gelangt.

4. Das Sattelaufsitzfahrzeug nach Anspruch 3, wobei
der Aufschließbedienungsabschnitt (50) derart angeordnet ist, dass die Schaltereinheit (60) eingeschaltet wird, indem der plattenartige Abschnitt (52) am Fahrzeugkörper aufwärts gedrückt wird.

5. Das Sattelaufsitzfahrzeug nach Anspruch 3, wobei
der Aufschließbedienungsabschnitt (50) derart angeordnet ist, dass die Schaltereinheit (60) eingeschaltet wird, indem der plattenartige Abschnitt (52) in der Fahrzeugkörper-Breitenrichtung einwärts gedrückt wird.

6. Das Sattelaufsitzfahrzeug nach einem der Ansprüche 1 bis 5, wobei
der Aufschließbedienungsabschnitt (50), in Fahrzeugkörper-Seitenansicht, von dem Seitenklappständer (10) bedeckt wird, wenn der Seitenklappständer (10) eingeklappt ist.

## Revendications

1. Véhicule du type à selle (1) doté d'une partie de stockage (25) qui comporte un organe de couvercle verrouillable (19), le véhicule du type à selle (1) comprenant :
une clé intelligente (200) authentifiée par une unité de commande (100) agencée dans le véhicule du type à selle (1) au moyen d'une communication sans fil;
un mécanisme de verrouillage (30) verrouillant et déverrouillant l'organe de couvercle (19) ;
une partie d'opération de déverrouillage (50) transmettant un signal de déverrouillage à l'unité de commande (100) ; et
un actionneur (202) connecté au mécanisme de verrouillage (30) et entraîné en fonction d'une instruction de l'unité de commande (100), dans lequel
la partie d'opération de déverrouillage (50) est disposée au niveau d'une position supérieure à une hauteur minimale par rapport au sol (H) du véhicule du type à selle (1) et inférieure à un mécanisme de charnière (150) qui supporte de manière à permettre l'ouverture/la fermeture de l'organe de couvercle verrouillable (19) qui est un siège du véhicule du type à selle (1),
l'unité de commande (100) entraîne l'actionneur (202) pour commuter le mécanisme de verrouillage (30) vers un état déverrouillé lorsque la partie d'opération de déverrouillage (50) est opérée, un signal de déverrouillage est ainsi transmis, et une authentification de la clé intelligente (200) est terminée,
une béquille latérale (10) permettant à une carrosserie de véhicule de tenir seule dans un état incliné est fournie,
la partie d'opération de déverrouillage (50) est disposée dans le voisinage de la béquille latérale (10) dans une vue latérale de carrosserie de véhicule, et
le mécanisme de verrouillage (30) est commuté vers un état verrouillé en maintenant un crochet (21) disposé sur l'organe de couvercle (19) par une plaque de verrouillage (34) qui est oscillante, et est commuté vers un état de déverrouillage en ce que, lorsque l'actionneur (202) est entraîné, un câble (35) relié à l'actionneur (202) est tiré, la plaque de verrouillage (34) oscille, et le crochet (21) est libéré.

2. Véhicule du type à selle selon la revendication 1, dans lequel
la motocyclette (1) comporte un sous-cadre (F5) et un sous-capot (9), le sous-cadre (F5) étant disposé dans la partie inférieure d'une carrosserie de véhicule, le sous-capot (9) recouvrant un extérieur du sous-cadre (F5), et
la partie d'opération de déverrouillage (50) est fixée au sous-cadre (F5) au niveau d'une position à l'intérieur du sous-capot (9).

3. Véhicule du type à selle (1) doté d'une partie de stockage (25) qui comporte un organe de couvercle verrouillable (19), le véhicule du type à selle (1) comprenant :
une clé intelligente (200) authentifiée par une unité de commande (100) agencée dans le véhicule du type à selle (1) au moyen d'une communication sans fil;
un mécanisme de verrouillage (30) verrouillant et déverrouillant l'organe de couvercle (19) ;
une partie d'opération de déverrouillage (50) transmettant un signal de déverrouillage à l'unité de commande (100) ; et
un actionneur (202) connecté au mécanisme de verrouillage (30) et entraîné en fonction d'une instruction de l'unité de commande (100), dans lequel
la partie d'opération de déverrouillage (50) est disposée au niveau d'une position supérieure à une hauteur minimale par rapport au sol (H) du véhicule du type à selle (1) et inférieure à un mécanisme de charnière (150) qui supporte de manière à permettre l'ouverture/la fermeture de l'organe de couvercle verrouillable (19) qui est un siège du véhicule du type à selle (1),
l'unité de commande (100) entraîne l'actionneur (202) pour commuter le mécanisme de verrouillage (30) vers un état déverrouillé lorsque la partie d'opération de déverrouillage (50) est opérée, un signal de déverrouillage est par conséquent transmis, et une authentification de la clé intelligente (200) est terminée,
une béquille latérale (10) permettant à une carrosserie de véhicule de tenir seule dans un état incliné est fournie,
la partie d'opération de déverrouillage (50) est disposée dans le voisinage de la béquille latérale (10) dans une vue latérale de carrosserie de véhicule, et
la partie d'opération de déverrouillage (50) comporte une partie en forme de plaque (52) et une unité de commutation (60), un occupant pressant la partie en forme de plaque (52) avec son pied, l'unité de commutation (60) étant commutée pour son activation lorsque la partie en forme de plaque (52) est pressée et un élément de saillie/rétraction (63) entre ainsi dans un état rétracté.

4. Véhicule du type à selle selon la revendication 3, dans lequel
la partie d'opération de déverrouillage (50) est disposée de sorte que l'unité de commutation (60) est commutée pour son activation lorsque la partie en forme de plaque (52) est pressée vers le haut de la carrosserie de véhicule.

5. Véhicule du type à selle selon la revendication 3, dans lequel
la partie d'opération de déverrouillage (50) est disposée de sorte que l'unité de commutation (60) est commutée pour son activation lorsque la partie en forme de plaque (52) est pressée vers l'intérieur dans la direction de la largeur de la carrosserie de véhicule.

6. Véhicule du type à selle selon l'une quelconque des revendications 1 à 5, dans lequel
la partie d'opération de déverrouillage (50) est recouverte par la béquille latérale (10) dans une vue latérale de carrosserie de véhicule lorsque la béquille latérale (10) est stockée.
